# EUROPÄISCHE PATENTANMELDUNG

(11) **EP 0 932 323 A2**
(43) Veröffentlichungstag der Anmeldung: **28.07.1999**
(21) Anmeldenummer: 99100518.2
(22) Anmeldetag: 13.01.1999
(51) Int. Cl.: H04Q 11/08

(54) **Verfahren zur Vermittlung von digitalen Sprachkanälen**

(30) Priorität: 14.01.1998 DE 19800994
(71) Anmelder: ROBERT BOSCH GMBH, 70442 Stuttgart (DE)
(72) Erfinder: Strenge, Klaus, 66352 Grossrosseln (DE); Lenz, Oliver, 63579 Freigericht (DE)

(57) **Zusammenfassung**

Die Erfindung betrifft ein Verfahren zur blockierungsfreien Vermittlung von mehreren digitalen Sprachkanälen (11, 12) mit einer bestimmten Übertragungsrate in Zeitschlitzen einer festgelegten Bit-Länge unter Einsatz einer Vermittlungseinheit (1) mit einem PCM (Puls Code Modulation)-Interface (2) und einem CFI (Configurable Interface)-Interface (3), zwischen an PCM-Ports (4) angeschlossenen PCM-Übertragungsleitungen und an CFI-Ports (5) angeschlossenen CFI-Übertragungsleitungen. Um die Vermittlung von Sprachkanälen (11, 12) mit einer niedrigeren Übertragungsrate in Sub-Zeitschlitzen einer geringeren Bit-Länge möglichst effizient zu gestalten, schlägt die Erfindung vor, daß bei dem CFI-Interface (3) jedem Zeitschlitz mit festgelegter Bit-Länge mehrere Sub-Zeitschlitze zugewiesen werden, daß durch geeignete Vorrichtungen jeder Zeitschlitz mit mehreren Sub-Zeitschlitzen in mehrere Zeitschlitze mit jeweils einem Sub-Zeitschlitz aufgeteilt wird und daß jeweils einer der Zeitschlitze mit einem Sub-Zeitschlitz an einem der CFI-Ports (5) anliegt.

## Beschreibung

### Stand der Technik

Die vorliegende Erfindung betrifft ein Verfahren zur blockierungsfreien Vermittlung von mehreren digitalen Sprachkanälen mit einer bestimmten Übertragungsrate in Zeitschlitzen einer festgelegten Bit-Länge unter Einsatz einer Vermittlungseinheit mit einem PCM (Puls Code Modulation)-Interface und einem CFI (Configurable Interface)-Interface, und mit mehreren PCM-Ports an dem PCM-Interface und mehreren CFI-Ports an dem CFI-Interface, zwischen an den PCM-Ports angeschlossenen PCM-Übertragungsleitungen und an den CFI-Ports angeschlossenen CFI-Übertragungsleitungen. Die vorliegende Erfindung betrifft außerdem eine Vermittlungseinheit zur Durchführung des Vermittlungsverfahrens.

Ein solches Vermittlungsverfahren ist seit einiger Zeit aus dem Bereich der digitalen Telefonie bekannt. Bei der digitalen Telefonie wird in einem ersten Teilnehmerendgerät ein zu übertragendes analoges Sprachsignal in bestimmten Abtastintervallen abgetastet und die Abtastwerte digitalisiert. Die digitalisierten Abtastwerte werden alleine oder abwechselnd mit den Binärcodes anderer digitalisierter Signale über eine Leitung an ein zweites Teilnehmerendgerät übertragen. Dort werden die einzelnen Binärcodes dann den einzelnen Sprachsignalen zugeordnet und wieder zu analogen Sprachsignalen zusammengesetzt.

Die Umwandlung eines analogen Sprachsignals in ein digitales Signal in dem ersten Teilnehmerendgerät erfolgt üblicherweise durch einen A/D-Wandler, der im einzelnen die folgenden Schritte durchführt. Zunächst findet ein Frequenzbandbegrenzungsschritt statt, bei dem das analoge Sprachsignal durch einen Tiefpaßfilter auf etwa 300 bis 3.400 Hz begrenzt wird. Im anschließenden Diskretisierungsschritt findet eine zeitdiskrete Abtastung des gefilterten Sprachsignals, beispielsweise durch einen elektronischen Schalter, statt. Dabei ist darauf zu achten, daß die Abtastfrequenz mindestens doppelt so groß ist wie die maximale Frequenz des gefilterten Sprachsignals. In einem Quantifizierungsschritt werden die Abtastwerte des noch analogen Signals digitalisiert. Bei einer n-Bit-Quantifizierung wird die Amplitude des Signals zwischen den Amplitudenmaxima beispielsweise in 2ⁿ gleich große Amplituden-Stufen unterteilt.

Da die Übertragung des n-Bit-Binärcodes üblicherweise nur einen Teil des Abtastintervalls benötigt, können mit Hilfe eines Multiplexers mehrere digitalisierte n-Bit-Binärcodes von unterschiedlichen Sprachsignalen in sich wiederholenden Zyklen über eine Leitung sequentiell übertragen werden, d.h., daß in dem übrigen Teil des Abtastintervalls die Binärcodes von anderen Sprachsignalen in aufeinander folgender Reihenfolge übertragen werden können. Dadurch ergibt sich ein zeitdiskretes Impuls-Code-Modulations (PCM)-Multiplex-Signal, welches über eine Leitung zu dem zweiten Teilnehmerendgerät übertragen wird.

In dem zweiten Teilnehmerendgerät werden die Binärcodes dieses PCM-Multiplex-Signals durch einen Demultiplexer den einzelnen Sprachsignalen zugeordnet, und durch einen D/A-Wandler werden die Binärcodes der einzelnen Sprachsignale wieder zu analogen Sprachsignalen zusammengesetzt.

Um die digitalen Sprachsignale von dem ersten Teilnehmerendgerät an das gewünschte zweite Teilnehmerendgerät zu vermitteln, werden sie über eine Vermittlungseinheit geleitet. Außer der Vermittlung von Sprachsignalen dient die Vermittlungseinheit auch als Schnittstelle zwischen unterschiedlichen digitalen Übertragungsstandards, im vorliegenden Fall als Schnittstelle zwischen PCM-Übertragungsleitungen und CFI-Übertragungsleitungen.

Aus dem Stand der Technik ist eine derartige Vermittlungseinheit beispielsweise als sog. "Extended PCM Interface Controller" der Firma Siemens bekannt. Dieser Controller ermöglicht eine blockierungsfreie Vermittlung von bis zu 64 digitalen Sprachkanälen mit einer Übertragungsrate von 64 kBit/s. Die Sprachkanäle werden in 8 Bit langen Zeitschlitzen in Abtastintervallen von 125 µs übertragen. Außerdem weist diese Umwandlungseinheit ein PCM-Interface und ein CFI-Interface auf. Das CFI-Interface kann als IOM-oder als SLD-Interface ausgelegt sein. Außer zur Vermittlung dient der Controller auch als Schnittstelle zwischen den PCM-Übertragungsleitungen und den IOM- oder den SLD-Übertragungsleitungen.

Der bekannte "Extended PCM Interface Controller" kann auch digitale Sprachkanäle mit einer geringeren Übertragungsrate als 64 kBit/s vermitteln, beispielsweise mit 32 kBit/s oder 16 kBit/s. Dazu werden die 8-Bit-Zeitschlitze bei dem CFI-Interface anstatt mit den vollen 8 Bits wie bei der Übertragungsrate von 64 kBit/s lediglich mit Sub-Zeitschlitzen mit 4 Bit Länge (bei 32 kBit/s) bzw. mit 2 Bit Länge (bei 16 kBit/s) belegt. An den einzelnen CFI-Ports kann eingestellt werden, welche Bits der 8-Bit-Zeitschlitze an dem jeweiligen CFI-Port bedient werden sollen. So können beispielsweise bei digitalen Sprachkanälen mit einer Übertragungsrate von 32 kBit/s entweder die oberen oder die unteren 4 Bits eines 8-Bit-Zeitschlitzes belegt werden. Die anderen 4 Bits sind frei. Die CFI-Ports werden dann so eingestellt, daß die oberen bzw. die unteren 4 Bits des 8-Bit-Zeitschlitzes bedient werden. Die Einstellung, auf welche Bits der 8-Bit-Zeitschlitze die einzelnen CFI-Ports zugreifen sollen, kann generell nur pro CFI-Port erfolgen.

Das hat den Nachteil, daß, um eine blockierungsfreie Vermittlung der digitalen Sprachkanäle zu gewährleisten, jeder der 8-Bit-Zeitschlitze nur mit Bits von einem Sprachkanal belegt werden kann. Das bedeutet, daß bei dem bekannten Controller trotz einer geringeren Übertragungsrate der zu vermittelnden Sprachkanäle nach wie vor nur maximal 64 digitale Sprachsignale vermittelt werden können.

Theoretisch wäre es bei dem bekannten "Extended PCM Interface Controller" zwar auch möglich, mehr als 64 digitale Sprachkanäle mit einer niedrigeren Übertragungsrate zu vermitteln. Dazu müßte aber jeder der 8-Bit-Zeitschlitze jeweils mit mehreren Sub-Zeitschlitzen von unterschiedlichen Sprachkanälen belegt werden. Bei einer Übertragungsrate von 32 kBit/s müßte dann beispielsweise jeder der 8-Bit-Zeitschlitze mit zwei Sub-Zeitschlitzen von jeweils 4 Bit Länge von zwei Sprachkanälen, also mit insgesamt 8 Bits, belegt sein. Dann könnten bei einer Übertragungsrate von 32 kBit/s maximal 128 digitale Sprachkanäle vermittelt werden. Allerdings würde die Tatsache, daß die Einstellung, auf welche Bits der 8-Bit-Zeitschlitze die einzelnen CFI-Ports zugreifen sollen, generell nur pro CFI-Port erfolgen kann, dazu führen, daß pro 8-Bit-Zeitschlitz nur ein Sub-Zeitschlitz bedient werden könnte. D.h. daß pro CFI-Port nur ein Sprachkanal frei vermittelbar wäre, die anderen Sprachkanäle des 8-Bit-Zeitschlitzes wären blockiert. Bei 128 theoretisch vermittelbaren 32 kBit/s-Sprachkanälen würde dies bedeuten, daß 64 der 32 kBit/s-Sprachkanäle blockiert und damit nicht vermittelbar wäre. Das würde zu einer in der Praxis nicht hinnehmbaren Beeinträchtigung der Vermittlung digitaler Sprachkanäle führen.

Die Aufgabe der vorliegenden Erfindung besteht deshalb darin, ein Vermittlungsverfahren der eingangs genannten Art dahingehend weiterzubilden, daß bei Sprachkanälen mit einer niedrigeren Übertragungsrate entsprechend mehr Sprachkanäle blockierungsfrei vermittelt werden können.

Zur Lösung dieser Aufgabe schlägt die Erfindung vor, daß zur Vermittlung von Sprachkanälen mit einer niedrigeren Übertragungsrate in Sub-Zeitschlitzen einer geringeren Bit-Länge bei dem CFI-Interface jedem Zeitschlitz mit festgelegter Bit-Länge mehrere Sub-Zeitschlitze zugewiesen werden, daß durch geeignete Vorrichtungen jeder Zeitschlitz mit mehreren Sub-Zeitschlitzen in mehrere Zeitschlitze mit jeweils einem Sub-Zeitschlitz aufgeteilt wird und daß jeweils einer der Zeitschlitze mit einem Sub-Zeitschlitz an einem der CFI-Ports anliegt.

Erfindungsgemäß wird vorgeschlagen, daß für eine möglichst effiziente Vermittlung von digitalen Sprachkanälen mit einer niedrigeren Übertragungsrate in Zeitschlitzen einer festgelegten Bit-Länge in vorteilhafter Weise jedem Zeitschlitz mehrere Sub-Zeitschlitze einer geringeren Bit-Länge zugewiesen werden. Das hat den Vorteil, daß ein Zeitschlitz einer festgelegten Bit-Länge zur Übertragung von mehreren Sprachkanälen mit einer niedrigeren Übertragungsrate in Sub-Zeitschlitzen einer geringeren Bit-Länge genutzt werden kann.

Da die Einstellung, auf welche Bits der Zeitschlitze die einzelnen CFI-Ports zugreifen sollen, um die richtigen Sub-Zeitschlitze der einzelnen Zeitschlitze zu bedienen, generell nur pro CFI-Port erfolgen kann, wird weiterhin erfindungsgemäß vorgeschlagen, daß an jedem CFI-Port ein Zeitschlitz einer festgelegten Bit-Länge anliegt, der lediglich mit einem Sub-Zeitschlitz einer geringeren Bit-Länge belegt ist. So kann an jedem CFI-Port gesondert eingestellt werden, auf welches Bit des anliegenden Zeitschlitzes zugegriffen werden soll, um den Sub-Zeitschlitz zu bedienen. Damit an den CFI-Ports nur Zeitschlitze mit jeweils einem Sub-Zeitschlitz anliegen, wird jeder Zeitschlitz mit mehreren Sub-Zeitschlitzen durch geeignete Vorrichtungen in mehrere Zeitschlitze mit jeweils einem Sub-Zeitschlitz aufgeteilt.

Durch das erfindungsgemäße Verfahren wird eine effiziente und blockierungsfreie Vermittlung von digitalen Sprachkanälen mit niedrigeren Übertragungsraten ermöglicht. Insbesondere sind alle zur Verfügung stehenden Sprachkanäle blockierungsfrei und damit voll nutzbar.

Gemäß einer vorteilhaften Weiterbildung der Erfindung wird vorgeschlagen, daß die Bit-Länge eines Zeitschlitzes ein ganzzahliges Vielfaches der Bit-Länge eines Sub-Zeitschlitzes ist. Daraus folgt, daß die bestimmte Übertragungsrate, die der Bit-Länge der Zeitschlitze entspricht, ein ganzzahliges Vielfaches der niedrigeren Übertragungsrate des zu vermittelnden Sprachkanals ist.

Um die Effizienz des Vermittlungsverfahrens noch weiter zu steigern, werden gemäß einer vorteilhaften Weiterbildung der Erfindung jedem Zeitschlitz so viele Sub-Zeitschlitze zugewiesen, daß die Summe der Bit-Längen der Sub-Zeitschlitze eines Zeitschlitzes gleich der Bit-Länge des Zeitschlitzes ist. Dadurch wird die volle Bit-Länge der Zeitschlitze für die Übertragung der Sprachkanäle mit niedrigeren Übertragungsraten und geringeren Bit-Längen eingesetzt.

Gemäß einer vorteilhaften Weiterbildung der Erfindung wird vorgeschlagen, daß die Sprachkanäle in Zeitschlitzen einer Länge von 8 Bit vermittelt werden. Die Sprachkanäle werden dann vorteilhafterweise in Sub-Zeitschlitzen einer Länge von 4 Bit vermittelt oder alternativ in Sub-Zeitschlitzen einer Länge von 2 Bit. Es ist aber auch denkbar, daß einem Zeitschlitz einer bestimmten Bit-Länge verschiedene Sub-Zeitschlitze mit unterschiedlichen Bit-Längen zugewiesen sind. So wäre es beispielsweise möglich, einem Zeitschlitz von 8 Bit Länge einen Sub-Zeitschlitz von 4 Bit Länge und zwei Sub-Zeitschlitze von 2 Bit Länge zuzuweisen.

Um den Zugriff auf die einzelnen Sub-Zeitschlitze in den Zeitschlitzen und damit die Bedienung der einzelnen Sprachkanäle zu vereinfachen, wird vorteilhafterweise vorgeschlagen, daß die einzelnen Bits der Sub-Zeitschlitze zusammenhängend in den Zeitschlitzen angeordnet werden.

Eine weitere Aufgabe der vorliegenden Erfindung besteht darin, die Effizienz von Vermittlungseinheiten der eingangs genannten Art bei der Vermittlung von Sprachkanälen mit einer niedrigeren Übertragungsrate zu steigern.

Zur Lösung dieser Aufgabe schlägt die Erfindung vor, daß bei der Vermittlungseinheit jeweils so viele CFI-Ports wie Sub-Zeitschlitze einem Zeitschlitz zugewiesen sind, zu einem CFI-Parallelport parallel miteinander verschaltet sind. Vorteilhafterweise weisen die CFI-Ports jeweils eine Data-Downstream-Leitung (Übertragungsrichtung zum Teilnehmer) und eine Data-Upstream-Leitung (Übertragungsrichtung zur Vermittlungseinheit) auf, und jeweils die Data-Downstream-Leitungen bzw. die Data-Upstream-Leitungen der CFI-Ports sind zu dem CFI-Parallelport mit einer Data-Downstream-Parallelleitung und einer Data-Upstream-Parallelleitung miteinander verschaltet.

An den CFI-Parallelports liegen Zeitschlitze mit mehreren Sub-Zeitschlitzen an. Durch die Parallelschaltung mehrerer CFI-Ports zu einem CFI-Parallelport wird jeder Zeitschlitz mit mehreren Sub-Zeitschlitzen in mehrere Zeitschlitze mit jeweils einem Sub-Zeitschlitz aufgeteilt, die dann an den CFI-Ports anliegen. Dadurch kann einerseits die gesamte Bandbreite der Zeitschlitze zur Übermittlung der Sprachkanäle mit einer niedrigeren Übertragungsrate ausgenutzt werden, indem mehrere Sub-Zeitschlitze einem Zeitschlitz zugewiesen sind, und andererseits liegen aber jeweils nur Zeitschlitze mit einem Sub-Zeitschlitz an den CFI-Ports an. Dadurch wird berücksichtigt, daß die Einstellung, auf welche Bits der Zeitschlitze die einzelnen CFI-Ports zugreifen sollen, um die Sub-Zeitschlitze der einzelnen Zeitschlitze zu bedienen, generell nur pro CFI-Port erfolgen kann. So kann an jedem CFI-Port eingestellt werden, auf welches Bit des anliegenden Zeitschlitzes zugegriffen werden soll, um den Sub-Zeitschlitz zu bedienen.

Gemäß einer vorteilhaften Weiterbildung der Erfindung weist die Vermittlungseinheit Zeitschlitze mit einer Länge von 8 Bit auf. Typischerweise werden Sprachkanäle mit einer Übertragungsrate von 64 kBit/s in 8-Bit-Zeitschlitzen übertragen. Vorteilhafterweise ist die Vermittlungseinheit für die Vermittlung von bis zu 64 digitalen Sprachkanälen mit einer Übertragungsrate von jeweils 32 kBit/s ausgelegt. Die Übertragung dieser Sprachkanäle erfolgt in Sub-Zeitschlitzen von 4 Bit Länge, so daß für eine effiziente Vermittlung jedem Zeitschlitz zwei Sub-Zeitschlitze zugewiesen werden. Dadurch kann die Anzahl von Sprachkanälen, die von der erfindungsgemäßen Vermittlungseinheit blockierungsfrei vermittelt werden können, von 32 auf 64 verdoppelt werden.

Bei einer Übertragungsrate von 32 kBit/s der zu vermittelnden Sprachsignale, d.h. einer Länge der Sub-Zeitschlitze von 4 Bit, und einer Länge der Zeitschlitze von 8 Bit sind gemäß einer vorteilhaften Weiterbildung der Erfindung jeweils zwei CFI-Ports zu einem CFI-Parallelport parallel miteinander verschaltet. Dadurch können jeweils zwei Sub-Zeitschlitze einem Zeitschlitz zugewiesen werden.

Wenn zwei Sub-Zeitschlitze einem Zeitschlitz zugewiesen sind, können die oberen vier Bits der Zeitschlitze gemäß einer vorteilhaften Weiterbildung der Erfindung jeweils über die CFI-Ports mit einer geraden Nummer und die unteren vier Bits der Zeitschlitze jeweils über die CFI-Ports mit einer ungeraden Nummer bedient werden. Alternativ können aber auch die oberen vier Bits der Zeitschlitze jeweils über die CFI-Ports mit einer ungeraden Nummer und die unteren vier Bits der Zeitschlitze jeweils über die CFI-Ports mit einer geraden Nummer bedient werden.

Vorteilhafterweise ist die Vermittlungseinheit für die Vermittlung von bis zu 128 digitalen Sprachkanälen mit einer Übertragungsrate von jeweils 16 kBit/s ausgelegt. Die Übertragung dieser Sprachkanäle erfolgt in Sub-Zeitschlitzen von 2 Bit Länge. Die Vermittlungseinheit weist typischerweise Zeitschlitze mit einer Länge von 8 Bit auf, so daß für eine effiziente Vermittlung jedem Zeitschlitz vier Sub-Zeitschlitze zugewiesen sind. Dadurch kann die Anzahl von Sprachkanälen, die von der erfindungsgemäßen Vermittlungseinheit blockierungsfrei vermittelt werden können, von 32 auf 128 vervierfacht werden.

Bei einer Übertragungsrate von 16 kBit/s der zu vermittelnden Sprachsignale, d.h. einer Länge der Sub-Zeitschlitze von 2 Bit, und einer Länge der Zeitschlitze von 8 Bit sind gemäß einer vorteilhaften Weiterbildung der Erfindung jeweils vier CFI-Ports zu einem CFI-Parallelport parallel miteinander verschaltet. Dadurch können jeweils vier Sub-Zeitschlitze einem Zeitschlitz zugewiesen werden.

Gemäß einer vorteilhaften Weiterbildung der Erfindung wird vorgeschlagen, daß das CFI-Interface als IOM (ISDN Oriented Modular)-Interface ausgelegt ist. An das IOM-Interface können beispielsweise auch Teilnehmerendgeräte mit einer komprimierten Übertragungsrate von jeweils 32 kBit/s angeschlossen werden, die nach dem DECT-Standard arbeiten.

Alternativ ist das CFI-Interface gemäß einer anderen vorteilhaften Weiterbildung der Erfindung als SLD (Subscriber Line Data)-Interface ausgelegt.

Gemäß einer Weiterbildung kann die Vermittlungseinheit bzw. das Verfahren für einen Mischbetrieb mit unterschiedlichen Bitraten ausgestaltet sein. Diese Möglichkeit trägt zur universellen Verwendbarkeit bei.

Ein bevorzugtes Ausführungsbeispiel der vorliegenden Erfindung wird nachfolgend anhand der Zeichnung näher erläutert. Es zeigt:
Fig. 1 eine schematische Darstellung einer erfindungsgemäßen Vermittlungseinheit zur Durchführung des erfindungsgemäßen Vermittlungsverfahrens,
Fig. 2 eine Vermittlungseinheit für einen Mischbetrieb.

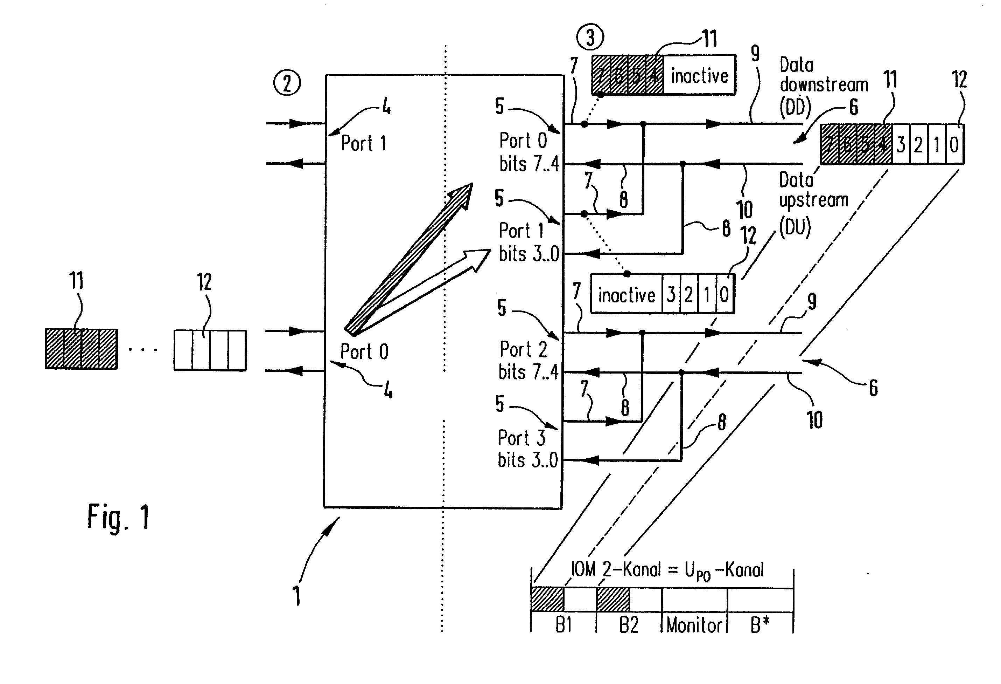

In Fig. 1 ist eine erfindungsgemäße Vermittlungseinheit in ihrer Gesamtheit mit dem Bezugszeichen 1 bezeichnet. Die Vermittlungseinheit 1 weist ein PCM (Puls Code Modulation)-Interface 2 und ein CFI (Configurable Interface)-Interface 3 auf. Das CFI-Interface 3 ist als IOM (ISDN Oriented Modular)-Interface ausgelegt, an das beispielsweise Teilnehmerendgeräte mit einer komprimierten Übertragungsrate von jeweils 32 kBit/s angeschlossen werden können, die nach dem DECT-Standard arbeiten. Die Vermittlungseinheit weist außerdem mehrere PCM-Ports 4 an dem PCM-Interface 2 und mehrere CFI-Ports 5 an dem CFI-Interface 3 auf.

Bei dem CFI-Interface 3 der Vermittlungseinheit 1 sind jeweils zwei CFI-Ports 5 zu einem CFI-Parallelport 6 parallel miteinander verschaltet. Genauer gesagt, weisen die CFI-Ports 5 jeweils eine Data-Downstream-Leitung 7 (Übertragungsrichtung zum Teilnehmer) und eine Data-Upstream-Leitung 8 (Übertragungsrichtung zur Vermittlungseinheit) auf, und jeweils die Data-Downstream-Leitungen 7 bzw. die Data-Upstream-Leitungen 8 von zwei der CFI-Ports 5 sind zu einem CFI-Parallelport 6 mit einer Data-Downstream-Parallelleitung 9 und einer Data-Upstream-Parallelleitung 10 miteinander verschaltet.

Zwei zu vermittelnde Sprachkanäle 11 und 12 mit einer niedrigeren Übertragungsrate, die über das PCM-Interface 2 zu der Vermittlungseinheit 1 gelangen, werden durch die Vermittlungseinheit 1 an die CFI-Ports 5 mit den Namen Port #0 und Port #1 vermittelt, um über diese an die Teilnehmerendgeräten (nicht dargestellt) zu gelangen, die an diesen CFI-Ports 5 (Port #0, Port #1) angeschlossenen sind. Die Zeitschlitze der Vermittlungseinheit 1 zum Übertragen der Sprachkanäle weisen 8 Bit Länge auf. Die Sprachkanäle 11 und 12 benötigen für ihre Übertragung nicht alle 8 Bits der Zeitschlitze. Sie werden in Sub-Zeitschlitzen von 4 Bit Länge übertragen.

Die 8-Bit-Zeitschlitze liegen an den CFI-Ports 5 an. An jedem CFI-Port 5 kann eingestellt werden, auf welche Bits der 8-Bit-Zeitschlitze der jeweilige CFI-Port 5 zugreifen soll. Die Einstellung kann generell nur pro CFI-Port 5 erfolgen. Aus diesem Grund werden den 8-Bit-Zeitschlitzen an jedem CFI-Port 5 jeweils nur ein 4-Bit-Sub-Zeitschlitz zugewiesen. So kann an den CFI-Ports 5 eingestellt werden, ob ein CFI-Port 5 auf die oberen 4 Bits des Zeitschlitzes (wie Port #0) oder auf die unteren 4 Bits des Zeitschlitzes (wie Port #1) zugreifen soll. Der nicht mit einem Sub-Zeitschlitz besetzte Teil des Zeitschlitzes ist inaktiv.

Durch die Parallelschaltung der CFI-Ports Port #0 und Port #1 liegt an dem CFI-Parallelport 6 ein Zeitschlitz an, dem zwei Sub-Zeitschlitze zugewiesen sind. Genauer gesagt, sind die oberen 4 Bits des Zeitschlitzes mit dem Sub-Zeitschlitz des ersten Sprachkanals 11 besetzt, wohingegen die unteren 4 Bits mit dem Sub-Zeitschlitz des zweiten Sprachkanals 12 besetzt sind. Auch den anderen 8-Bit-Zeitschlitzen der Vermittlungseinheit 1 werden jeweils zwei 4-Bit-Sub-Zeitschlitze zugewiesen. Dadurch kann die Anzahl der Sprachkanäle mit niedrigerer Übertragungsrate, die von der Vermittlungseinheit 1 blockierungsfrei vermittelt werden können, erheblich erhöht, im vorliegenden Ausführungsbeispiel verdoppelt, werden.

Trotz der Kopplung, insbesondere der Parallelschaltung, der CFI-Ports besteht keine Einschränkung etwa nur Sprachkanäle einer ersten Bitrate, z.B. 32 kbit/s-Sprachsignale, zu vermitteln. Es können auch weiterhin 64 kbit/s-Sprachkanäle vermittelt werden und dies sogar wahlweise über Port #0 oder Port #1 zweier parallelgeschlteter CFI-Ports 5 ohne Einschränkungen.

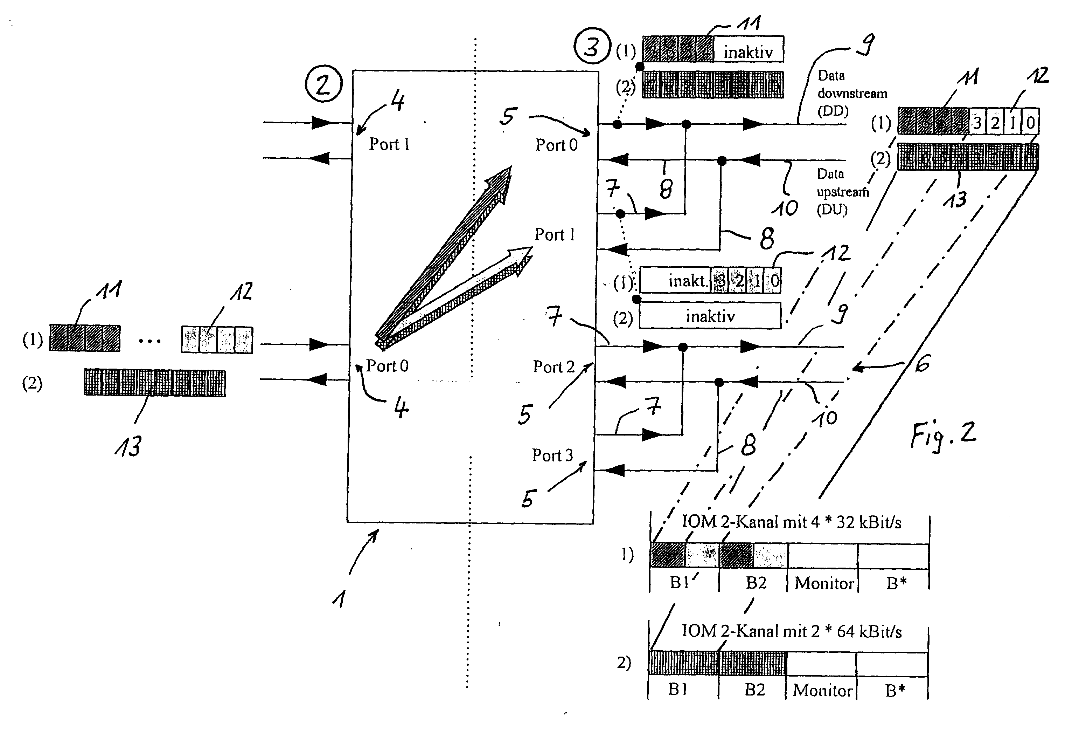

Sogar ein Mischbetrieb unterschiedlicher Bitraten ist, wie Fig. 2 zeigt, möglich. An einem gemeinsamen PCM-Port 4 können Sprachkanäle unterschiedlicher Bitraten angeliefert werden. So können beispielsweise Sprachkanäle 13 mit einer Bitrate von 64 kbit/s für ISDN-Telefonendgeräte wie auch Sprachkanäle 11 und 12 von 32 kbit/s für DECT-Basisstationen mit Handys über die Vermittlungseinheit 1 ohne Einschränkungen, etwa bezüglich einer Blockierung, vermittelt werden. Ausgehend von der mit (1) gekennzeichneten Variante, nämlich der blockierungsfreien Vermittlung von 32 kbit/s (4Bit) Zeitschlitzen kommt jetzt die Variante (2) hinzu, die die Vermittlung eines üblichen 64 kbit/s (8 Bit) Zeitschlitzes beschreibt. Dieser Zeitschlitz 13 mit der höheren Bitrate als die Zeitschlitze 11 und 12 kann wahlweise entweder über den CFI-Port #0, wie in Fig. 2 gezeigt, oder auch über Port #1 zweier gekoppelter Ports 5, d.h. hier parallelgeschalteten Ports, zum Teilnehmer vermittelt werden; es ist lediglich dafür zu sorgen, daß der äquivalente Zeitschlitz des Ports 5, der nicht benutzt werden soll, inaktiv bleibt. Dieses Verfahren funktioniert auch, wenn auf dem PCM-Interface 2 der Vermittlungseinheit 1 sowohl 64 kbit/s- als auch 32 kbit/s-Sprachproben gesendet werden. Diese können unabhängig voneinander und blockierungsfrei mittels Variante (2) bzw. (1) zu den entsprechenden Endgeräten vermittelt werden.

Sofern alle vier in Fig. 2 gezeigten CFI-Ports 5 parallelgeschaltet werden, läßt sich das beschriebene Verfahren prinzipiell auch auf Endgeräte für 16 kbit/s-Signale erweitern.

Durch die aufgezeigten Maßnahmen ist es möglich insbesondere neuentwickelte Baugruppen für den Anschluß von 32 kbit/s DECT-Basisstationen in der Fertigung einem Funktionstest zu unterziehen, indem übliche 64 kbit/s (ISDN)-Telefonendgeräte an die Vermittlungseinheit 1 angeschlossen werden und darüber "telefoniert" wird.

Es ist auch möglich, daß Vermittlungseinheiten in unterschiedlichen Bestückungsvarianten dazu benutzt werden, um entweder ausschließlich 64 kbit/s (ISDN)-Endgeräte oder 32 kbit/s-Endgeräte daran zu betreiben.

Es ist auch ein Mischbetrieb von Endgeräten mit verschiedenen Bitraten an einer Vermittlungseinheit (Baugruppe) möglich, z.B. ISDN-Telefone und DECT-Basisstationen.

Die Vermittlungseinheit 1 kann natürlich höherintegriert sein und die aufgezeigte Vermittlungseinheit der Figuren 1 und 2 mehrfach enthalten, wobei keine Einschränkung der unterschiedlichen Varianten eintritt. Wesentlich ist nur, daß CFI-Ports parallelgeschaltet sind, um die unterschiedlichen Varianten zu realisieren.

## Patentansprüche

1. Verfahren zur blockierungsfreien Vermittlung von mehreren digitalen Sprachkanälen mit einer bestimmten Übertragungsrate in Zeitschlitzen einer festgelegten Bit-Länge unter Einsatz einer Vermittlungseinheit (1) mit einem PCM (Puls Code Modulation)-Interface (2) und einem CFI (Configurable Interface)-Interface (3), und mit mehreren PCM-Ports (4) an dem PCM-Interface (2) und mehreren CFI-Ports (5) an dem CFI-Interface (3), zwischen an den PCM-Ports (4) angeschlossenen PCM-Übertragungsleitungen und an den CFI-Ports (5) angeschlossenen CFI-Übertragungsleitungen, **dadurch gekennzeichnet,** daß zur Vermittlung von Sprachkanälen (11, 12) mit einer niedrigeren Übertragungsrate in Sub-Zeitschlitzen einer geringeren Bit-Länge bei dem CFI-Interface (3) jedem Zeitschlitz mit festgelegter Bit-Länge mehrere Sub-Zeitschlitze zugewiesen werden, daß durch geeignete Vorrichtungen jeder Zeitschlitz mit mehreren Sub-Zeitschlitzen in mehrere Zeitschlitze mit jeweils einem Sub-Zeitschlitz aufgeteilt wird und daß jeweils einer der Zeitschlitze mit einem Sub-Zeitschlitz an einem der CFI-Ports (5) anliegt.

2. Verfahren nach Anspruch 1, dadurch gekennzeichnet, daß die Bit-Länge eines Zeitschlitzes ein ganzzahliges Vielfaches der Bit-Länge eines Sub-Zeitschlitzes ist.

3. Verfahren nach Anspruch 2, dadurch gekennzeichnet, daß jedem Zeitschlitz so viele Sub-Zeitschlitze zugewiesen werden, daß die Summe der Bit-Längen der Sub-Zeitschlitze eines Zeitschlitzes gleich der Bit-Länge des Zeitschlitzes ist.

4. Verfahren nach einem der Ansprüche 1 bis 3, dadurch gekennzeichnet, daß die Sprachkanäle (11, 12) in Zeitschlitzen einer Länge von 8 Bit vermittelt werden.

5. Verfahren nach einem der Ansprüche 1 bis 4, dadurch gekennzeichnet, daß die Sprachkanäle (11, 12) in Sub-Zeitschlitzen einer Länge von 4 Bit vermittelt werden.

6. Verfahren nach einem der Ansprüche 1 bis 4, dadurch gekennzeichnet, daß die Sprachkanäle (11, 12) in Sub-Zeitschlitzen einer Länge von 2 Bit vermittelt werden.

7. Verfahren nach einem der Ansprüche 1 bis 6, dadurch gekennzeichnet, daß die einzelnen Bits der Sub-Zeitschlitze zusammenhängend in den Zeitschlitzen angeordnet werden.

8. Vermittlungseinheit (1) zur Durchführung des Vermittlungsverfahrens nach einem der Ansprüche 1 bis 7, dadurch gekennzeichnet, daß jeweils so viele CFI-Ports (5) wie Sub-Zeitschlitze einem Zeitschlitz zugewiesen sind, zu einem CFI-Parallelport (6) parallel miteinander verschaltet sind.

9. Vermittlungseinheit (1) nach Anspruch 8, dadurch gekennzeichnet, daß die CFI-Ports (5) jeweils eine Data-Downstream-Leitung (7) (Übertragungsrichtung zum Teilnehmer) und eine Data-Upstream-Leitung (8) (Übertragungsrichtung zur Vermittlungseinheit) aufweisen und daß jeweils die Data-Downstream-Leitungen (7) bzw. die Data-Upstream-Leitungen (8) der CFI-Ports (5) zu dem CFI-Parallelport (6) mit einer Data-Downstream-Parallelleitung (9) und einer Data-Upstream-Parallelleitung (10) miteinander verschaltet sind.

10. Vermittlungseinheit (1) nach Anspruch 8 oder 9, dadurch gekennzeichnet, daß sie Zeitschlitze mit einer Länge von 8 Bit aufweist.

11. Vermittlungseinheit (1) nach einem der Ansprüche 8 bis 10, dadurch gekennzeichnet, daß sie für die Vermittlung von bis zu 64 digitalen Sprachkanälen (11, 12) mit einer Übertragungsrate von jeweils 32 kBit/s ausgelegt ist.

12. Vermittlungseinheit (1) nach Anspruch 10 und 11, dadurch gekennzeichnet, daß jeweils zwei CFI-Ports (5) zu einem CFI-Parallelport (6) parallel miteinander verschaltet sind.

13. Vermittlungseinheit (1) nach Anspruch 12, dadurch gekennzeichnet, daß die oberen vier Bits der Zeitschlitze jeweils über die CFI-Ports (5) mit einer geraden Nummer und die unteren vier Bits der Zeitschlitze jeweils über die CFI-Ports (5) mit einer ungeraden Nummer bedient werden.

14. Vermittlungseinheit (1) nach Anspruch 12, dadurch gekennzeichnet, daß die oberen vier Bits der Zeitschlitze jeweils über die CFI-Ports (5) mit einer ungeraden Nummer und die unteren vier Bits der Zeitschlitze jeweils über die CFI-Ports (5) mit einer geraden Nummer bedient werden.

15. Vermittlungseinheit (1) nach einem der Ansprüche 8 bis 10, dadurch gekennzeichnet, daß sie für die Vermittlung von bis zu 128 digitalen Sprachkanälen (11, 12) mit einer Übertragungsrate von jeweils 16 kBit/s ausgelegt ist.

16. Vermittlungseinheit (1) nach Anspruch 10 und 15, dadurch gekennzeichnet, daß jeweils vier CFI-Ports (5) zu einem CFI-Parallelport (6) parallel miteinander verschaltet sind.

17. Vermittlungseinheit (1) nach einem der Ansprüche 8 bis 16, dadurch gekennzeichnet, daß das CFI-Interface (3) als IOM (ISDN Oriented Modular)-Interface ausgelegt ist.

18. Verfahren nach einem der Ansprüche 1 bis 7, dadurch gekennzeichnet, daß Sprachkanäle (11, 12; 13) unterschiedlicher Bitraten an einem gemeinsamen PCM-Port (4) angeliefert werden, daß Sprachkanäle mit einer ersten Bitrate (11, 12) zu einem von mindestens zwei miteinander gekoppelten, insbesondere parallelgeschalteten, CFI-Ports (5) übertragen werden und daß Sprachkanäle mit einer zweiten Bitrate (13) ebenfalls zu einem dieser gekoppelten CFI-Ports (5) übertragen werden, wobei sichergestellt wird, daß der äquivalente Zeitschlitz des jeweils nicht benutzten CFI-Ports (5) inaktiv bleibt.

19. Verfahren nach Anspruch 18, dadurch gekennzeichnet, daß sowohl 64 kbit/s- als auch 32 kbit/s-Sprachkanalsignale über die gleiche Vermittlungseinheit (1) vermittelt werden.

20. Verfahren nach Anspruch 18 oder 19, dadurch gekennzeichnet, daß die Sprachkanalsignale mit der jeweils höheren Bitrate (13) wahlweise über einen der miteinander gekoppelten CFI-Ports (5) vermittelt werden.

21. Verfahren nach einem der Ansprüche 18 bis 20, dadurch gekennzeichnet, daß insbesondere zu einem Funktionstest von Vermittlungseinheiten (1) zur Übertragung von digitalen Sprachkanälen einer ersten Bitrate, insbesondere 32 kbit/s- Sprachsignalen von DECT-Basisstationen, Endgeräte für eine zweite Bitrate, insbesondere 64 kbit/s (ISDN)-Endgeräte, angeschlossen werden und über diese Endgeräte der Funktionstest vorgenommen wird.

22. Verfahren nach einem der Ansprüche 18 bis 21, dadurch gekennzeichnet, daß Vermittlungseinheiten (1) in unterschiedlichen Bestückungsvarianten dazu benutzt werden, um entweder ausschließlich Endgeräte für eine erste Bitrate, insbesondere 64 kbit/s (ISDN)-Endgeräte, oder Endgeräte für eine zweite Bitrate, insbesondere 32 kbit/s-Endgeräte, daran zu betreiben.

23. Verfahren nach einem der Ansprüche 18 bis 22, dadurch gekennzeichnet, daß ein Mischbetrieb von Endgeräten mit verschiedenen Bitraten an vorzugsweise nur einer Vermittlungseinheit (1) vorgesehen ist.
